# EUROPÄISCHE PATENTSCHRIFT

(11) **EP 0 498 150 B1**
(45) Veröffentlichungstag und Bekanntmachung des Hinweises auf die Patenterteilung: **28.09.1994**
(21) Anmeldenummer: 92100118.6
(22) Anmeldetag: 07.01.1992
(51) Int. Cl.: F16C 11/06

(54) **Kugelgelenk für Kraftfahrzeuge**
Ball-joint for motor vehicles
Articulation à rotule pour véhicules à moteur

(30) Priorität: 31.01.1991 DE 4102863
(43) Veröffentlichungstag der Anmeldung: 12.08.1992
(73) Patentinhaber: LEMFOERDER METALLWAREN AG., D-49441 Lemförde (DE)
(72) Erfinder: Buhl, Reinhard, D-49163 Bohmte (DE); Kramer, Klaus, W-2846 Neuenkirchen (DE); Dubielzig, Hans, W-2844 Lemförde (DE); Richter, Reinhard, W-4508 Bohmte (DE)
(74) Vertreter: Bruse, Willy Hans Heinrich

(56) Entgegenhaltungen:
- DE-U- 8 620 178
- FR-A- 1 566 066

## Beschreibung

Die Erfindung betrifft ein Kugelgelenk für Kraftfahrzeuge mit Merkmalen nach dem Oberbegriff des Patentanspruches 1.

Bekannt ist ein solches Kugelgelenk aus dem DE-GM 86 20 178. Hiernach ist an dem einen Ende des Gehäuses, welches dem Gelenkzapfen gegenüberliegt, ein Flansch mit einer radialen Fläche ausgebildet, die mit einer radialen Gegenfläche an einem Flansch der Außenbuchse zusammenwirkt und die beide zwischen Sich einen radialflanschartigen Ansatz der zwischen beiden angeordneten Elastomerhülse aufnehmen. Bei der bekannten Anordnung bilden eine auf das Gehäuse aufschiebbare Innenbuchse, eine Außenbuchse und eine dazwischenliegende Gummischicht ein Gummimetallteil, welches in Anpassung an spezifische Betriebsbedingungen gestaltet ist und gegen dessen Radialflansch sich das Gehäuse mit einem entsprechenden Flansch in der Nullage kräftefrei abstützt. Axiale Schwingungen zwischen dem Gehäuse und der Außenbuchse werden in einem begrenzten Ausmaß ermöglicht, wobei jedoch die in dem elastomeren Werkstoff bewirkten Verformungen sogleich progressiv wachsende Rückstellkräfte aufbauen, die zudem in den beiden Verschieberichtungen unterschiedlich sind. Größere Axialkräfte werden in einer Richtung einwandfrei übertragen.

Ein Kugelgelenk mit einer Elastomerschicht zwischen dem Außenmantel eines Gehäuses und einer Außenbuchse ist aus der US-PS 4,034,996 bekannt. Durch die DE-PS 12 76 463 ist ein Kugelgelenk mit in beiden Axialrichtungen wirkenden Anschlägen offenbart, die als Radialflächen eines mit dem Gehäuse fest verbundenen Flansches ausgebildet sind.

Aufgabe der Erfindung ist die weitere Ausbildung solcher Kugelgelenke, insbesondere für Zwecke der Radführung, in der Weise, daß definierte Begrenzungsmittel für axiale Schwingungen zwischen dem Gehäuse und der Außenbuchse auf kostengünstige Weise vorzusehen sind und gegebenenfalls ein einstellbares, begrenztes Axialspiel zwischen dem Gehäuse und der Außenbuchse ohne Rückstellkräfte ermöglicht wird.

Zur Lösung dieser Aufgabe ist erfindungsgemäß eine Ausbildung mit Merkmalen nach dem Patentanspruch 1 vorgesehen.

Das dabei hervorzuhebende Merkmal ist die Ausbildung zweier sich radial erstreckender Flächen an beiden Seiten eines mit dem Gehäuse erst bei dem Zusammenbau des Gelenks fest verbindbaren Flansches. Durch diese Ausbildung wird eine Vereinfachung des Herstellungsaufwandes erreicht, weil der radiale Flansch, an dem die radialen Flächen der Begrenzung der axialen Bewegung zwischen dem Gehäuse und der Außenbuchse angeordnet sind, erst bei dem Zusammenbau des Gelenks mit dem Gehäuse fest verbunden werden. Diese mit dem Gehäuse fest verbindbaren Radialflächen sind an einem Flachring ausgebildet, der mit dem Gehäuserand etwa in der Ebene des Deckels des Gehäuses liegt und gemeinsam mit diesem Deckel in einem Arbeitsgang durch Materialverformung des Gehäuserandes verbunden ist. Diese Verbindung erfolgt vorteilhaft in an sich bekannter Weise durch Bördelung, Verstemmung oder dergleichen. Bei einer ersten, relativ einfachen Ausführungsform ist zwischen den radialen Flächen an den beiden Seiten dieses Flanschringes und den Gegenflächen an der Außenbuchse, die für die Begrenzung der Axialbewegung wirksam sind, ein Belag aus einem elastischen Werkstoff vorgesehen, wobei darauf zu achten ist, daß dieser elastische Belag keinen nachteiligen Einfluß auf die Kinematik des Kugelgelenkes ausübt, ein solches Kugelgelenk jedoch einen erheblichen Beitrag zur Schwingungsdämpfung und somit zur Komfortverbesserung für die Insassen eines Kraftfahrzeuges leistet. Zum Zwecke der Vereinfachung der Herstellung ist bei einem besonderen Ausführungsbeispiel vorgesehen, daß die Außenbuchse den Flanschring lediglich teilweise in sich diagonal gegenüberliegenden Bereichen umgreift. Dies ermöglicht, daß der elastische Belag zunächst auf in der Vormontage schräg nach außen gespreizten Armen an dem entsprechenden Ende der Außenbuchse festhaftend angebracht wird. Beim Zusammenbau des Gelenkes werden diese Arme gegeneinander nach innen gebogen, so daß sie den Flanschring in der gewünschten Weise außenseitig umgreifen. Um dabei nach dem Zusammenbau des Gelenkes eine exakte Lage des elastischen Belages an den den Flanschring außenseitig umgreifenden Armen zu erreichen, sieht ein besonderes Gestaltungsmerkmal vor, daß die schräg nach außen gespreizten Arme eine sickenförmige Prägung aufweisen, die die Lage der Knickkante beim Einbiegen der Arme bestimmt, und daß der elastische Belag auf den Armen im Bereich dieser Prägung eine Unterbrechung aufweist, die beim Einwärtsbiegen der Arme einen Materialstau vermeidet.

Bei einer anderen bevorzugten Ausführungsform ist der beim Gelenkzusammenbau mit dem Gehäuse fest verbindbare Flanschring zwischen zwei mit einem vorbestimmbaren axialen Abstand voneinander angeordneten radialen Flächen der Außenbuchse angeordnet, so daß der Flanschring sich zwischen den beiden letzteren Radialflächen in einem vorbestimmbaren Spielraum mit einer ebenfalls vorbestimmbaren axialen Federungscharakteristik bewegen kann. Bei einer solchen Anordnung ist es gegebenenfalls vorteilhaft, die zusammenwirkenden Radialflächen wenigstens einseitig mit einem elastischen Belag zu versehen, um axiale Bewegungen in den Endlagen weich abzufangen. In Verbindung mit einer solchen Anordnung kann eine radiale Einfederung zwischen dem Gehäuse und der Außenbuchse dadurch in Winkellagen unterschiedlich beeinflußt werden, daß die Elastomerhülse in Längsrichtung durchgehende Einschnitte aufweist, die sich in einem mehr oder weniger großen Bereich über den Umfang der Elastomerhülse erstrecken und die an den Enden durch bügelförmige Stege einstückig überbrückt sind, welche vor allem Biegespannungen und keinen molekularen Schubspannungen im Bereich des gewünschten Axialspiels zwischen dem Gehäuse und der Außenbuchse ausgesetzt sind. Die bügelförmigen Stege dienen dabei zur Abdeckung der Einschnitte und verhindern das Eindringen von Schmutz in die Einschnitte.

Schließlich ist besonders zu erwähnen, daß die Anwendung der Erfindungsmerkmale nach Anspruch 6 auch dadurch vorteilhaft gestaltet werden können, daß der den Flanschring umgreifende Rand der Außenbuchse mit dem Rand eines Außendeckels durch Materialverformung (z.B. durch Bördelung) verbunden und die außenliegende radiale Fläche der Außenbuchse an diesem Außendeckel ausgebildet sein kann. Anstelle des Außendeckels kann auch lediglich ein sich quer über das Gehäuse erstreckendes Blech vorgesehen sein, dessen Enden an zwei sich diagonal gegenüberliegenden Stellen mit laschenartigen Ansätzen der Außenbuchse verbunden sind, die den Flanschring außenseitig umgreifen.

Auf der Zeichnung sind Ausführungsbeispiele der Erfindung dargestellt. Es zeigen:
- Figur 1: ein Kugelgelenk zur Hälfte im Schnitt in einer Achsebene und zur Hälfte in Ansicht,
- Figur 2: eine Draufsicht auf das Kugelgelenk nach Fig.1,
- Figur 3: einen Teilschnitt der Anordnung nach Fig.1, jedoch zu dieser um 90° versetzt,
- Figur 4: einen Teilschnitt entsprechend Fig.3 im vormontierten Zustand,
- Figur 5: eine Vergrößerung der Einzelheit A in Fig.1,
- Figur 6: eine Darstellung entsprechend Fig.1 bei einem abgeänderten Ausführungsbeispiel,
- Figur 7: eine Draufsicht auf das Beispiel nach Fig.6,
- Figur 8: einen Teilschnitt der Anordnung nach Fig.6 senkrecht zur Zeichenebene,
- Figur 9: eine Vergrößerung der Einzelheit B in Fig.6,
- Figur 10: eine Darstellung entsprechend Fig.1 eines weiteren Ausführungsbeispieles,
- Figur 11: eine Draufsicht auf die Anordnung nach Fig.1,
- Figur 12: einen Teilschnitt durch die Anordnung nach Fig.10 senkrecht zur Zeichenebene und
- Figur 13: eine Vergrößerung der Einzelheit C in Fig.10.

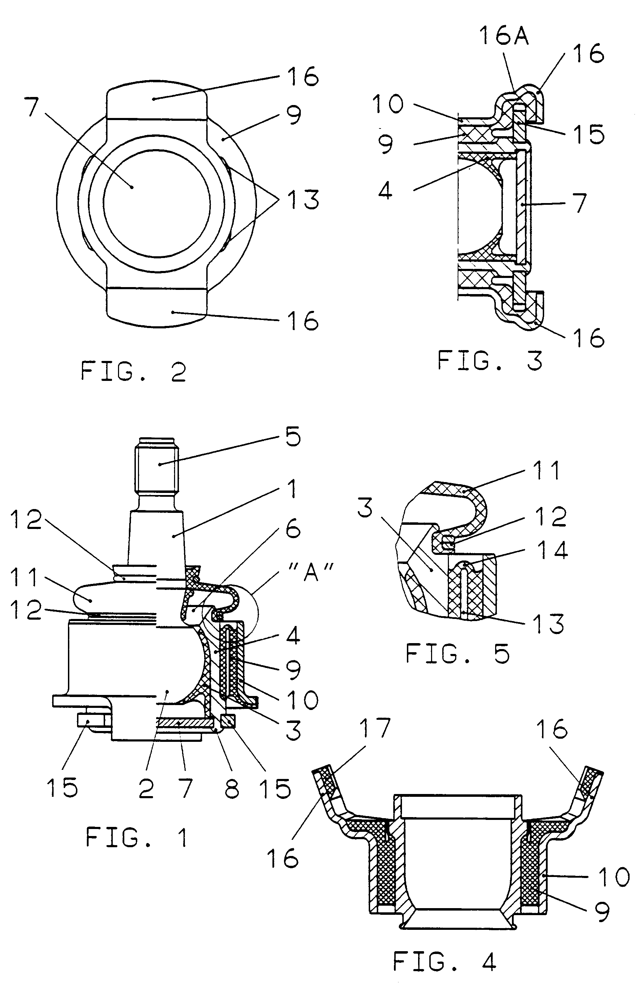

Die Kugelgelenke nach den Ausführungsbeispielen der Figuren 1, 6 und 10 bestehen in übereinstimmender Bauweise aus dem Gelenkzapfen 1 mit der an seinem einen Ende ausgeformten Gelenkkugel 2, dem Gehäuse 3 und der in dieses Gehäuse eingesetzten Lagerschale 4 aus einem begrenzt elastischen Werkstoff, in welcher die Gelenkkugel 2 allseits beweglich gelagert ist. Der Gelenkzapfen ist mit dem der Befestigung dienenden Gewindeende 5 durch eine Öffnung 6 aus dem Gehäuse 3 herausgeführt, dessen anderes Ende durch einen Deckel 7 verschlossen ist, dessen Verbindung mit dem Gehäuse aus einem Bördelrand 8 oder dergleichen besteht und durch den eine gewisse Vorspannung auf die Lagerschale 4 ausgeübt werden kann. Die Außenseite des Gehäuses 3 ist durch eine Elastomerhülse 9 umschlossen, die ihrerseits in eine starre Außenbuchse 10 eingesetzt ist. Sowohl zwischen dem Gehäuse 3 und der Elastomerhülse 9 als auch zwischen dieser und der Außenbuchse 10 bestehen festhaftende Verbindungen. Ein Dichtungsbalg 11 ist mit dem einen Ende an dem die Öffnung 6 umgebenden Gehäuserand und mit dem anderen Ende an dem Schaft des Gelenkzapfens 1 befestigt und vermeidet somit das Eindringen von Verunreinigungen durch die offene Gehäuseseite in das Gelenk. Zur Befestigung des Dichtungsbalgs 11 mit seinen Enden am Gehäuse 3 bzw. am Schaft des Gelenkzapfens 1 dienen im Falle des Beispieles Federringe 12 oder dergleichen. Ein solches Kugelgelenk wird mit der Außenbuchse 10 in ein Lagerauge eines Fahrzeugteils eingesetzt und mit dem Gewindeende 5 des Gelenkzapfens 1 an einem anderen Fahrzeugteil befestigt.

Die Elastomerhülse 9 ist bei allen dargestellten Ausführungsbeispielen mit sich in axialer Richtung erstreckenden und über die Länge der Elastomerhülse durchgehenden Einschnitten versehen, die sich über einen gewünschten Teilbereich des Umfanges in Anpassung an die Betriebsbedingungen erstrecken. Zwischen den Einschnitten 13 liegen somit Materialbereiche zur Dämpfung in Drehrichtung wirksamer Schwingungen. An den Enden sind diese Einschnitte 13 durch bügelförmige, einstückig angeformte Stege 14 überbrückt. Durch diese sich in Längsrichtung parallel zur Längsachse des Gelenks erstreckenden Einschnitte kann jeder gewünschte Abstimmung bei der radialen Einfederung innerhalb des zulässigen Bewegungsbereiches erreicht werden. Auch die Form dieser Einschnitte kann in Anpassung an den gewünschten Zweck frei bestimmt werden.

In Ausführung des Erfindungsgedankens ist mit dem deckelseitigen Rand des Gehäuses 3 ein Flanschring 15 beim Zusammenbau des Gelenks fest verbindbar. Dieser Flanschring liegt etwa in der Ebene des Deckels 7 für das Gehäuse 3, so daß die Verbindung des Flanschringes 15 mit dem Gehäuse 3 in einem Arbeitsgang beim Verschließen des Gehäuses 3 erfolgen kann. Der Deckel 7 und der Flanschring 15 werden somit in einem Arbeitsgang eingebördelt, verstemmt oder in anderer Weise durch Materialverformung befestigt. Bei dem Ausführungsbeispiel nach den Figuren 1 bis 4 ist das der offenen Gehäuseseite zugekehrte Ende der Außenbuchse 10 in zwei sich diametral zur Längsachse des Gelenks gegenüberliegenden Bereichen mit armartigen Verlängerungen 16 versehen, die den Flanschring 15 außenseitig umgreifen. Der elastomere Werkstoff der Elastomerhülse 9 erstreckt sich auch im Bereich dieser armartigen Verlängerungen 16 zwischen deren Innenseite und dem Flanschring 15. Zum Zwecke der erleichterten Herstellung werden diese Arme 16 gemäß Figur 4 in einer Vormontagestufe zunächst schräg nach außen gestellt und auf der Innenseite mit dem elastomeren Werkstoff 17 der Elastomerhülse 9 festhaftend verbunden. Erst danach werden die Arme 16 beim Zusammenbau des Gelenks um den Flanschring 15 in die aus Figur 3 ersichtliche Lage herumgebogen. Um dabei zu erreichen, daß eine einwandfreie Materialverformung möglich ist und die Radialflächen der Arme 16 sich parallel zu den radialen Flächen auf den Flachseiten des Flanschringes 15 erstrecken, ist der elastomere Belag 17 auf der Innenseite der Arme 16 in dem Bereich zwischen den radialen Flächen geschwächt oder unterbrochen. Außerdem sind die Arme 16 an der späteren Knickstelle mit einer deren Lage bestimmenden, sickenförmigen Prägung 16a versehen. Die beiden den Flanschring 15 außenseitig umgreifenden Arme 16 begrenzen somit die axiale Beweglichkeit des Gehäuses 3 gegenüber der Außenbuchse 10. Bei dieser Ausführungsform wird durch den elastischen Belag 17 auf der Innenseite der Arme 16 bei Axialbewegungen des Gehäuses 3 gegenüber der Außenbuchse 10 ein entsprechendes Rückstellmoment aufgebaut.

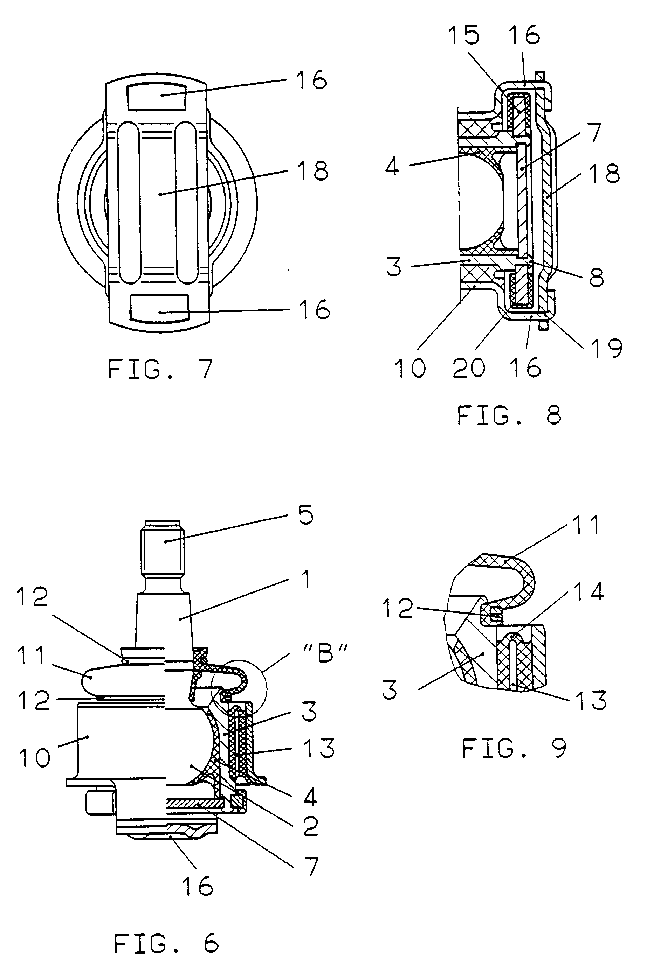

Bei dem Ausführungsbeispiel nach den Figuren 6 bis 9 sind am deckelseitigen Ende der Außenbuchse 10 ebenfalls in zwei sich diagonal zur Längsmittellinie des Gelenks gegenüberliegenden Bereichen armartige Ansätze 16 ausgebildet, die einen bei der Montage des Gelenkes fest mit dessen Gehäuse verbindbaren Flanschring 15 außenseitig umgreifen. Dargestellt ist ein Ausführungsbeispiel, bei dem die freien Enden der Arme 16 durch Schlitze 19 in dem Blech 18 hindurchgesteckt und dann umgebogen sind (Figur 8). Gegenüber dem zuvor erläuterten Ausführungsbeispiel in den Figuren 1 bis 5 besteht eine Besonderheit darin, daß zwischen den sich radial erstreckenden Anschlagflächen an dem Flanschring 15 und den sich ebenfalls radial erstreckenden Gegenflächen einerseits an den Armen 16 und andererseits an der Innenseite des Bleches 18 ein freies Axialspiel vorhanden ist, so daß das Gehäuse 3 mit dem Flanschring 15 sich innerhalb dieses Axialspielraumes frei bewegen kann. Bei dieser Anordnung wird durch das Blech 18 außerdem eine gewisse Sicherheit gegen Rückverformung der eingebogenen Arme erreicht. Um axiale Bewegungen an den durch die Anschlagflächen begrenzten Enden sanft abzufangen ist es jedoch empfehlenswert, wenigstens die einen radialen Anschlagflächen mit einem elastischen Werkstoff zu beschichten. Im Falle des dargestellten Ausführungsbeispieles ist der Flanschring mit einer dessen Rand einfassenden Beschichtung 20 versehen. Auch bei dieser Ausführungsform sind der Flanschring 15 und der Deckel 7 durch einen gemeinsamen Bördelrand 8 bei der Montage des Gelenks mit dem Gehäuse 3 verbunden.

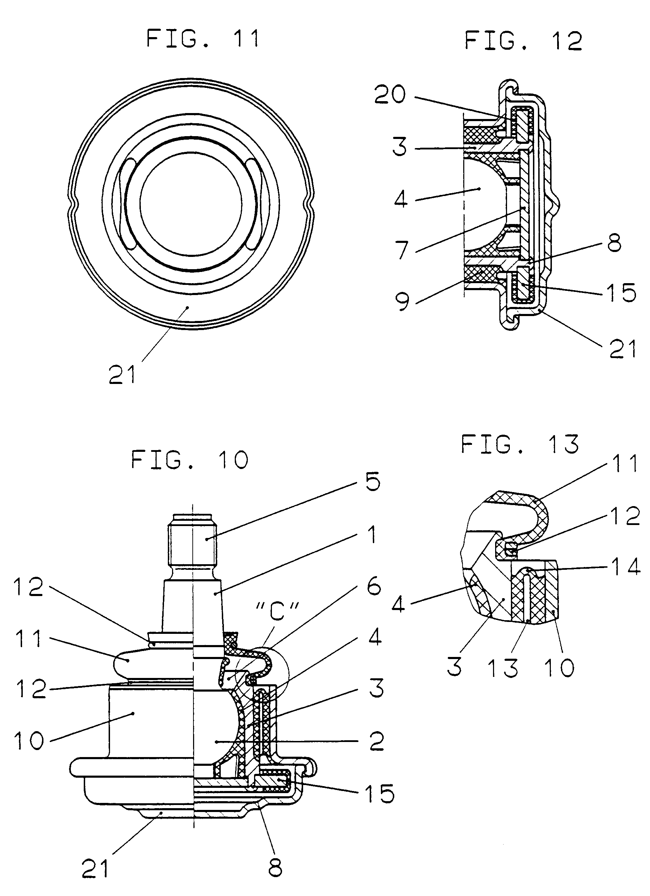

In den Figuren 10 bis 13 ist ein Ausführungsbeispiel dargestellt, bei dem die Außenbuchse 10 lediglich einen radial nach außen vorspringenden Kragenrand aufweist, der andererseits mit einem Topfrand eines Außendeckels 21, zum Beispiel durch Bördelung, verbunden ist. Die Anordnung des Flanschringes 15 und dessen Verbindung mit dem Gehäuse 3 entspricht der Beschreibung zu den Ausführungsbeispielen 6 bis 8. Bei der Anordnung nach den Figuren 10 bis 11 bildet der Flanschrand an der Außenbuchse 10 die eine radiale Gegenfläche für den Flanschring 15, während die andere radiale Gegenfläche an der Innenseite des topfförmigen Außendeckels ausgebildet ist. Durch die Darstellung in der Figur 11 wird verdeutlicht, daß dieser topfförmige Deckel auch lediglich ringförmig ausgebildet sein kann, also im mittleren Bereich offen ist. Eine geschlossene Ausbildung ist jedoch vorzuziehen, wenn eine besondere Verschmutzungsgefahr besteht.

| BEZUGSZEICHENLISTE: | | | |
|---|---|---|---|
| 1 | Gelenkzapfen | 12 | Federring |
| 2 | Gelenkkugel | 13 | Einschnitte |
| 3 | Gehäuse | 14 | Steg |
| 4 | Lagerschale | 15 | Flanschring |
| 5 | Gewindeende | 16 | Arme, 16a Prägung |
| 6 | Öffnung | 17 | elastomerer Belag |
| 7 | Deckel | 18 | Blech |
| 8 | Bördelrand | 19 | Schlitz |
| 9 | Elastomerhülse | 20 | Beschichtung |
| 10 | Außenbuchse | 21 | Außendeckel |
| 11 | Dichtungsbalg | | |

## Patentansprüche

1. Kugelgelenk für Fahrwerksteile in Kraftfahrzeugen, bei dem ein Gelenkzapfen mit einer Gelenkkugel mittels einer Lagerschale aus Kunststoff in einem topfartig ausgebildeten Gehäuse gelagert und durch eine Öffnung aus dem auf der dieser Öffnung gegenüberliegenden Gehäuseseite durch einen Deckel verschlossenen Gehäuse herausgeführt ist, wobei das Gehäuse an seinem Außenumfang von einer Elastomerhülse umschlossen ist und mit dieser axial beweglich in eine starre Außenbuchse eingesetzt ist, Radialflächen am Gehäuse sowie an der Außenbuchse die axiale Bewegung des Gehäuses gegenüber der Außenbuchse begrenzen, und wobei die Radialflächen am Gehäuse durch die beiden Seiten eines mit dem Gehäuse fest verbundenen Flansches gebildet sind, dadurch gekennzeichnet, daß der mit einem axialen Bewegungsraum zwischen den Radialflächen der Außenbuchse (10) eingreifende Flansch als Flanschring ausgebildet ist, der mit dem Gehäuse etwa in der Ebene des Deckels (7) und gemeinsam mit diesem Deckel (7) in einem Arbeitsgang durch Materialverformung des Gehäuserandes verbunden ist.

2. Kugelgelenk nach Anspruch 1, dadurch gekennzeichnet, daß zwischen den radialen Flächen des Flanschringes (15) und den mit diesen zusammenwirkenden Gegenflächen der Außenbuchse (10) ein Belag (17) aus einem elastischen Werkstoff vorgesehen ist.

3. Kugelgelenk nach Anspruch 1, dadurch gekennzeichnet, daß das eine Ende der Außenbuchse (10) den Flanschring (15) außenseitig umgreift und zwei zueinander parallele radiale Anschlagflächen bildet, die mit den radialen Flächen des Flanschringes (15) zusammenwirken.

4. Kugelgelenk nach Anspruch 3, dadurch gekennzeichnet, daß der den Flanschring (15) umgreifende Rand (16) der Außenbuchse (10) mit den Enden eines sich diametral über den Deckel (7) des Gehäuses (3) erstreckenden Bleches (18) verbunden ist.

5. Kugelgelenk nach Anspruch 3, dadurch gekennzeichnet, daß die Außenbuchse (10) im Bereich des Flanschringes (15) mit dem Rand eines Außendeckels (21) durch Materialverformung verbunden und die außenliegende radiale Fläche der Außenbuchse (10) an diesem Außendeckel (21) ausgebildet ist.

6. Kugelgelenk nach Anspruch 5, dadurch gekennzeichnet, daß die Außenbuchse (10) den Flanschring (15) lediglich teilweise in zwei sich diagonal gegenüberliegenden Bereichen (16) umgreift.

7. Kugelgelenk nach den Ansprüchen 2 und 6, dadurch gekennzeichnet, daß die sich diagonal gegenüberliegenden Bereiche mittels zweier von der Außenbuchse (10) eingebogener Arme (16) gebildet sind, daß eine die Lage der Knickkante beim Einbiegen der Arme vorbestimmende Prägung (16a) vorgesehen ist, und daß der elastische Belag (17) auf den in der Vormontage schräg nach außen gespreizten Armen (16) im Bereich dieser Prägung eine Unterbrechung aufweist.

8. Kugelgelenk nach den Ansprüchen 1 bis 6, dadurch gekennzeichnet, daß die radialen Flächen des Flanschringes (15) eine Beschichtung (20) aus einem elastischen Werkstoff aufweisen und diese Beschichtungen (20) einen axialen Abstand von den Gegenflächen der Außenbuchse (10) aufweisen.

9. Kugelgelenk nach den Ansprüchen 1 bis 8, dadurch gekennzeichnet, daß die Elastomerhülse (9) in Längsrichtung durchgehende Einschnitte (13) aufweist, die an den Enden durch einstückig angeformte, bügelförmige Stege (14) überbrückt sind.

## Claims

1. A ball joint for parts of the running gear in motor vehicles, wherein a pivot pin comprising a spherical part is mounted in a plastics bearing shell in a pot-shaped casing and extends outwards through an opening in the casing, which is closed by a cover on the side opposite the opening, the outer periphery of the casing being surrounded by an elastomer sleeve and inserted so as to be movable axially therewith in a rigid outer bush, radial surfaces on the casing and on the outer bush limiting the axial motion of the casing relative to the outer bush, and the radial surfaces on the casing being formed by the two sides of a flange permanently connected to the casing, characterised in that the flange, which engages with axial clearance between the radial surfaces of the outer bush (10) is a flange ring which is connected to the casing, approximately in the plane of the cover (7), by shaping the material of the edge of the casing together with the cover (7) in a single operation.

2. A ball joint according to claim 1, characterised in that a lining (17) of resilient material is provided between the radial surfaces of the flanged ring (15) and the surfaces of the outer bush (10) co-operating therewith.

3. A ball joint according to claim 1, characterised in that one end of the outer sleeve (10) surrounds the outside of the flanged ring (15) and forms two parallel radial abutment surfaces which co-operate with the radial surfaces of the flanged ring (15).

4. A ball joint according to claim 1, characterised in that the edge (16) of the outer sleeve (10) surrounding the flanged ring (15) is connected to the ends of a metal plate (18) extending diametrically over the cover (7) of the casing (3).

5. A ball joint according to claim 3, characterised in that in the neighbourhood of the flanged ring (15), the outer bush (10) is connected to the edge of an outer cover (21) by shaping of material, and the outer radial surface of the outer sleeve (10) is formed on the outer cover (21).

6. A ball joint according to claim 5, characterised in that the outer bush (10) surrounds the flanged ring (15) only partly, at two diagonally opposite regions (16).

7. A ball joint according to claims 2 and 6, characterised in that the diametrically opposite regions are formed by two arms (16) bent inwards from the outer bush (10), an embossed part (16a) is provided so as to determine the position of the bent edge when the arms are bent inwards, and the resilient lining (17) is interrupted in the neighbourhood of the embossed part on the arms (16), which are bent obliquely outwards during pre-assembly.

8. A ball joint according to claims 1 to 6, characterised in that the radial surfaces of the flanged ring (15) are coated (20) with a resilient material, and the coatings (20) are at an axial distance from the co-operating surfaces of the outer sleeve (10).

9. A ball joint according to claims 1 to 8, characterised in that the elastomeric sleeve (9) is formed in the longitudinal direction with continuous notches (13) which are bridged at the ends by integrally-moulded curved webs (14).

## Revendications

1. Articulation à rotule pour parties de châssis d'un véhicule automobile dans laquelle un pivot d'articulation, comportant une rotule d'articulation, est monté au moyen d'un coussinet en matière plastique dans un boîtier en forme de cuvette et fait saillie, par une ouverture, hors du boîtier qui est fermé par un couvercle du côté de ce boîtier qui est situé à l'opposé de ladite ouverture, tandis que, sur son contour extérieur, le boîtier est entouré par un manchon élastomère et est monté avec ce manchon dans une douille extérieure rigide de manière à pouvoir se déplacer axialement et que des surfaces radiales situées sur le boîtier et sur la douille extérieure limitent le déplacement axial du boîtier vis-à-vis de la douille extérieure, les surfaces radiales prévues sur le boîtier étant constituées par les deux faces d'une collerette fixée à demeure sur le boîtier, caractérisée en ce que la collerette, qui s'engage avec un espace de déplacement axial entre les surfaces radiales de la douille extérieure (10), est réalisée sous la forme d'un anneau en forme de collerette qui est relié au boîtier approximativement dans le plan du couvercle (7) et en commun avec ce couvercle (7), en une seule opération par déformation de matière du bord du boîtier.

2. Articulation à rotule selon la revendication 1, caractérisée en ce qu'une garniture (17) en matière élastique est prévue entre les surfaces radiales de l'anneau en forme de collerette (15) et les surfaces complémentaires, coopérant avec ces surfaces radiales, de la douille extérieure.

3. Articulation à rotule selon la revendication 1, caractérisée en ce que l'une des extrémités de la douille extérieure (10) entoure l'anneau en forme de collerette (15) par sa face extérieure et forme deux surfaces radiales de butée qui sont parallèles entre elles et coopèrent avec les surfaces radiales de l'anneau en forme de collerette (15).

4. Articulation à rotule selon la revendication 3, caractérisée en ce que le bord (16) de la douille extérieure (10) qui entoure l'anneau en forme de collerette (15) est fixé aux extrémités d'une tôle (18) qui s'étend diamétralement au-dessus du couvercle (7) du boîtier (3).

5. Articulation à rotule selon la revendication 3, caractérisée en ce que, dans la zone de l'anneau en forme de collerette (15), la douille extérieure (10) est reliée au bord d'un couvercle extérieur (21) par déformation de matière et la surface radiale de la douille extérieure (10) qui est située du côté extérieur est réalisée sur ce couvercle extérieur (21).

6. Articulation à rotule selon la revendication 5, caractérisée en ce que la douille extérieure (10) entoure l'anneau en forme de collerette (15) uniquement de manière partielle, en deux zones (16) diagonalement opposées.

7. Articulation à rotule selon l'une des revendications 2 et 6, caractérisée en ce que les zones diagonalement opposées sont formées au moyen de deux bras (16) repliés vers l'intérieur à partir de la douille extérieure (10), en ce qu'il est prévu une partie emboutie (16a) qui détermine au préalable la position de l'arête de pliage lors du pliage des bras vers l'intérieur et en ce que la garniture élastique (17), située sur les bras (16) déployés d'une manière inclinée vers l'extérieur pendant le préassemblage, comporte une interruption dans la zone de cette partie emboutie.

8. Articulation à rotule selon l'une des revendications 1 à 6, caractérisée en ce que les surfaces radiales de l'anneau en forme de collerette (15) comportent un revêtement (20) en une matière élastique et en ce que ces revêtements (20) présentent un espacement axial vi-à-vis des surfaces complémentaires de la douille extérieure (10).

9. Articulation à rotule selon l'une des revendications 1 à 8, caractérisée en ce que le manchon élastomère (9) comporte, suivant la direction longitudinale, des parties découpées (13) continues dont les extrémités sont recouvertes par des ponts (14) en forme d'étrier qui sont venus d'une seule pièce au formage.
